# EUROPEAN PATENT APPLICATION

(11) **EP 2 906 022 A1**
(43) Date of publication of application: **12.08.2015**
(21) Application number: 15154236.2
(22) Date of filing: 06.02.2015
(51) Int. Cl.: H05B 33/08

(54) **Circuit to keep electronic transformers working while under loaded**

(30) Priority: 06.02.2014 GB 201402004
(71) Applicant: Marulaled (Pty) Ltd, 7800 Diep Rivier (ZA)
(72) Inventor: DE VAAL, Gerardus Geertruud, 7708 Kenilworth (ZA)
(74) Representative: Kramer, Dani

(57) **Abstract**

A sub-circuit for keeping under-loaded electronic transformers delivering output power, includes connectors (AC1,AC2) configured for connecting the sub-circuit to the transformer and to the powered circuit. The sub-circuit includes a Delon doubler circuit (D1,D2,C1,C2) that is connectable to the transformer via the connectors (AC1,AC2) and that is configured to supply DC to an output of the Delon doubler circuit (D1,D2,C1,C2); and a current regulator (1) connected to the output of the Delon doubler circuit (D1,D2,C1,C2). The current regulator may be a linear (1) or a non-linear (2,3) current regulator.

## Description

### FIELD OF THE INVENTION

The invention relates to electronic circuits and devices that can act as variable impedance and can be combined with transformers feeding loads. The invention is described largely with reference to loads in the form of LED illuminating devices, but it is not limited to any type of load or powered circuit.

### BACKGROUND TO THE INVENTION

Many commercially available electronic or magnetic transformers were designed to power halogen lamps. In the case of electronic transformers, if the load connected to the transformer is not sufficient, the transformer may not supply power at all or supply it intermittently. This means that the lamp connected does not supply enough light.

Most electronic transformers use a free running oscillator which requires an output load in order to keep oscillating. A trigger circuit in the transformer restarts the oscillator periodically if it stops and often only a fraction of the nominal output voltage is generated. The absence of sufficient current through the output winding of the transformer causes the start-up to fail. This is not the case with halogen lamps where the transformers start reliably.

LED lights are often retrofitted to replace halogen lamps and offer energy savings and longevity compared to traditional incandescent lights. It is these energy savings that lead to the transformer incompatibility problems mentioned above.

Often the consumer lacks the knowledge of the minimum load requirements of the transformers and purchases retrofit lamps that are incompatible with an installed transformer. The end result of these incompatibility issues is that the light flickers or does not come on at all. Lamps are often installed in places that are difficult to access-which adds to the frustration of having fitted an incompatible lamp.

Figure 1 is an extract from US 2010/0134049 A1 and shows a circuit in which a current source is activated when the LED current drops below a certain level and a constant current is drawn from the transformer to maintain constant overall power consumption. This implementation is costly, requiring logic circuitry and switching elements to maintain constant power consumption - which negates the optimisation of efficiency.

Figure 2 is an extract from US 2013/0221864 A1 and shows a solution that is based on lowering the output voltage (paragraph [0029] of US 2013/0221864 A1). A resistor drains a capacitor that is isolated from the driver circuit via an anti reverse diode. The resistor is 160 Ω and the capacitor is a 10uF tantalum or electrolytic capacitor. The limitation of this solution is that the impedance presented to the transformer is constant and does not reduce as the output voltage reduces. In addition the circuit relies on tantalum or electrolytic capacitors which are significantly larger and have high equivalent series resistance. Another shortfall of this solution is that the resistor is permanently connected and is used to drain the capacitor. It and the reverse biased diode permanently dissipate heat, resulting in reduced efficiency.

The circuit shown in Figure 3 is an extract from WO 2014/033684 A1 and which results in improved efficiency by using a current source (a constant current shunt) in parallel over the capacitor, to drain the capacitor. The capacitor is 470nF and the constant current source is 20mA. This is an improvement over US 2013/0221864 A1 where a resistor is used, as the current source will dissipate less power than the resistor.

All three prior attempts mentioned above make use of a full bridge rectifier for addressing incompatibility between loads and electronic transformers and they all consume power when connected to a magnetic transformer (which does not have a minimum load requirement for proper operation).

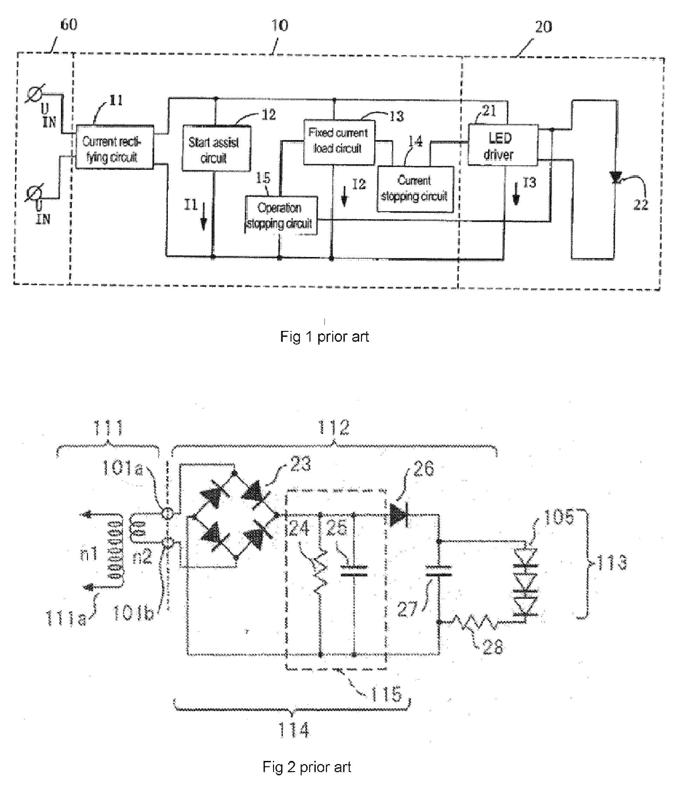

All the prior art shown in Figures 1 to 3 include a full bridge rectifier with two diode drops between the transformer output and the circuit driving the LEDs. This increases the energy loss and impedance presented to the transformer. In addition the sub-circuit will only be operational above the double voltage drop of the diodes and it will provide no impedance to the transformer below this.

The present invention seeks to provide a cost-effective sub-circuit which keeps electronic transformers generating output power if they are under-loaded. The sub-circuit should require as few parts and consume as little power as possible.

Preferably, the sub-circuit should only be active when used in combination with an electronic transformer, it should present a low impedance to the transformer when the transformer is about to turn off, and the overall efficiency should be as high as possible. When a magnetic transformer is used, the circuit should consume as little power as possible - preferably no power should be consumed.

The present invention further seeks to provide a convenient and compact manner to apply the sub-circuit in a system consisting of a transformer and a LED lamp, which is compatible with most common LED lamps.

### SUMMARY OF THE INVENTION

According to the present invention there is provided a sub-circuit including connectors configured for connecting the sub-circuit to at least one transformer and for connecting the sub-circuit to at least one powered circuit, said sub-circuit including:
at least one Delon doubler circuit that is connectable to the transformer via the connectors and that is configured to supply DC to an output of the Delon doubler circuit; and
a current regulator connected to the output of the Delon doubler circuit.

The powered circuit is any circuit that is intended to be driven by power from the electronic transformer and can include LEDs, LED drivers, or any other circuitry or components that require power.

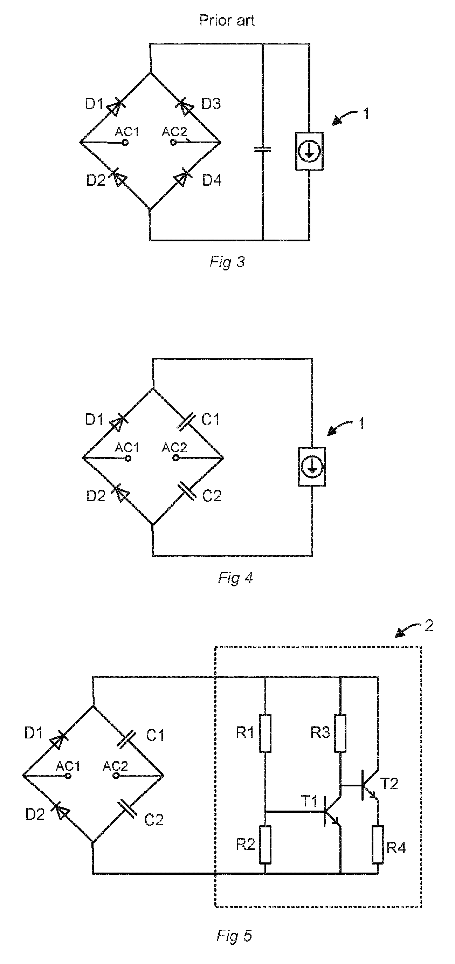

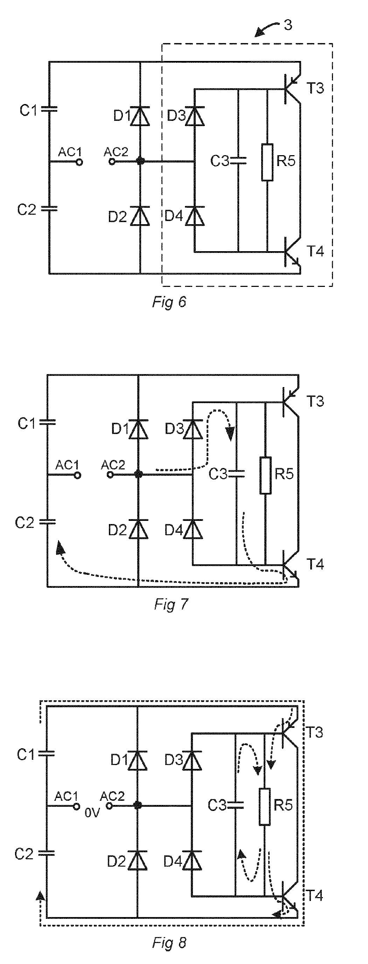

The current regulator may be a constant current regulator or a non-linear current regulator and may comprise a circuit as shown in Figure 5 or Figure 6.

In one example, the current regulator (2) may comprise a circuit including a first resistor (R1) and a second resistor (R2) connected in series, a first transistor (T1) with the base of the first transistor (T1) connected between the first and second resistors (R1 ,R2) and with the base and emitter of the first transistor (T1) connected parallel to the second resistor (R2), a third resistor (R3) connected between the collector of the first transistor (T1) and the end of the first resistor (R1) that is opposite from the second resistor (R2), and a second transistor (T2) with the base and the collector of the second transistor (T2) connected parallel to the third resistor (R3), the emitter of the second transistor (T2) being connected to the emitter of the first transistor (T1) via a fourth resistor (R4).

In another example the current regulator may comprise a circuit including: a third transistor (T3) with the collector of the third transistor (T3) connected between a first capacitor (C1) and a first diode (D1) of the Delon doubler circuit; a third diode (D3) connected between the first diode (D1) and a second diode (D2) of the Delon doubler circuit and said third diode (D3) being connected to the base of the third transistor (T3); a fourth transistor (T4) with the emitter of the fourth transistor (T4) connected between a second capacitor (C2) and the second diode (D2) of the Delon doubler circuit, and with the collector of the fourth transistor (T4) being connected to the emitter of the third transistor (T3); a fourth diode (D4) connected between the first diode (D1) and the second diode (D2) of the Delon doubler circuit and said fourth diode (D4) being connected to the base of the fourth transistor (T4); a third capacitor (C3) connected parallel to the third and fourth diodes (D3,D4); and a fifth resistor (R5) connected parallel to the third capacitor (C3).

The sub-circuit is an analogue circuit and the term "analogue" refers herein to electronic circuits that do not include logic or switching elements.

The current regulator and capacitors of the Delon doubler circuit may be configured such that the capacitors are discharged, in use, by the current regulator at a rate high enough for the discharges to occur at a frequency that is higher than what is visually perceptible and/or to change between low and high impedance multiple times during the power cycle of a source of AC power that is connected to the connectors.

The sub-circuit may be mounted on a printed circuit board (PCB) and the connectors may be in the form of two slots defined in the PCB.

Each of the slots may have a curved shape and may extend concentrically in the PCB and the radial widths of each of the slots may taper in a common rotational direction.

The invention extends to any novel aspects or features described and/or illustrated herein.

Further features of the invention are characterised by the other independent and dependent claims

The invention extends to methods and/or apparatus substantially as herein described with reference to the accompanying drawings.

### BRIEF DESCRIPTION OF THE DRAWINGS

For a better understanding of the present invention, and to show how the same may be carried into effect, the invention will now be described by way of non-limiting example, with reference to the accompanying drawings in which:
Figure 1 shows a diagram of a sub-circuit that is an extract from US 2010/0134049 A1;
Figure 2 shows a diagram of a sub-circuit that is an extract from US 2013/0221864 A1;
Figure 3 shows a diagram of a sub-circuit that is an extract from PCT/IB2013/058172;
Figure 4 shows a diagram of a first embodiment of a sub-circuit according to the present invention;
Figure 5 shows a diagram of a second embodiment of a sub-circuit according to the present invention;
Figures 6 to 8 show diagrams of a third embodiment of a sub-circuit according to the present invention;
Figure 9 shows a schematic representation of a transformer; with high voltage input connections and low voltage output connections;
Figure 10 shows the discharge curves of the capacitors of the doubler circuits of Figures 4 and 5;
Figure 11 shows the total voltage over the capacitor of the doubler circuit of Figure 4, over time.
Figures 12 to 14 show the same profile view of a printed circuit board (PCB) for the sub-circuits of any one of Figures 4 to 8, with two plated slots defined in the PCB;
Figures 15 and 16 show the PCB of Figure 12 with G5.3-type base pins received in the plated slots;
Figure 17 shows the G5.3-type pins of Figures 15 and 16, with the PCB rotated clockwise;
Figures 18 and 19 show the PCB of Figure 12 with G4-type base pins received in the plated slots;
Figure 20 shows the G4-type pins of Figures 18 and 19, with the PCB rotated clockwise;
Figure 21 shows an exploded side view of a bi-pin base and a bi-pin holder;
Figure 22 shows a side view of the bi-pin type base and bi-pin holder of Figure 21 with the pins of the base received in recesses of the holder; and
Figure 23 shows the bi-pin type base and bi-pin holder of Figures 21 and 22, with the PCB of Figures 12 to 20.

### DETAILED DESCRIPTION OF THE DRAWINGS

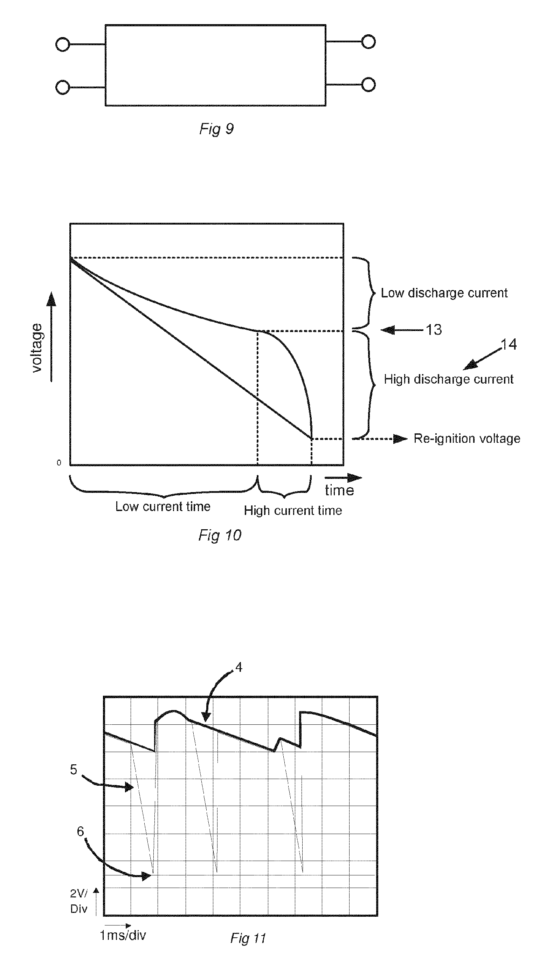

Figure 4 shows the first and simplest embodiment of a sub-circuit of the present invention. A doubler circuit is formed with diodes D1 and D2 and capacitors C1 and C2 and the doubler circuit can be electrically connected at terminals AC1 and AC2 to the low voltage output connections of the transformer shown in Figure 9 -which can be an electronic or a magnetic transformer. The sub-circuit is connected in parallel with the transformer and load.

The doubler circuit is a "Delon circuit", i.e. a voltage doubling rectifier that uses a bridge topology in which two diodes are connected in series between the rectifier output terminals, with the first rectifier input between the two diodes, and two capacitors connected in series, parallel to the two diodes, with the second rectifier input between the two capacitors.

The sub-circuit includes a current regulator in the form of a current source 1 (similar to that used in the sub-circuit of Figure 3) and the current source 1 drains capacitors C1,C2. If the electronic transformer stops generating output voltage, capacitors C1,C2 are drained according the graph shown in Figure 11. Line 5 (in Figure 11) shows the voltage over the capacitors C1, C2 being discharged by the current source 1 until the transformer re-triggers at point 6. If the transformer generates output voltage, the capacitors C1,C2 remain charged according to line 4 in Figure 11.

High efficiency is achieved by consuming less power and halving the number of forward voltage diode drops, when compared to prior art - particularly the sub-circuit of Figure 3. The two capacitors C1,C2 in Figure 4 act as the low impedance load presented to the transformer, rendering the parallel capacitor in Figure 3 obsolete. The efficiency could be improved even further by actively switching the current source 1 in and out as required, but this would add complexity (and bulk and cost).

The prior art of Figures 1-3 all consume power. The capacitors in the doubler circuit act as a high impedance for 50 or 60Hz output voltage of a magnetic transformer and low impedance for the high frequency signals (around 50khz) of an electronic transformer.

Figure 5 shows the second embodiment of a sub-circuit of the present invention that is similar to the sub-circuit shown in Figure 4 and includes the doubler circuit receiving output power from the transformer at terminals AC1 and AC2, but in which the power consumption of the circuit has been lowered by replacing the current source of Figure 4, with a non-linear current regulator 2.

The current regulator 2, includes a first resistor R1 and a second resistor R2 connected in series. The base of a first transistor T1 is connected between the first and second resistors R1,R2 and the base and emitter of the first transistor T1 are connected parallel to the second resistor R2. A third resistor R3 is connected between the collector of the first transistor T1 and the end of the first resistor R1 that is opposite from the second resistor R2. The base and collector of a second transistor T2 are connected parallel to the third resistor R3 and the emitter of the second transistor T2 is connected to the emitter of the first transistor T1 via a fourth resistor R4.

In this circuit, C1 and C2 are discharged with two different curves as reflected in Figure 10 in order to achieve better circuit efficiency. This is achieved by sensing the voltage over C1 and C2 and when the voltage drops below a predetermined level, transistors T1 and T2 change state. Resistors R1 and R2 form a resistor divider which switches on transistor T1. If T1 is ON, the base of transistor T2 is pulled low by transistor T1. As a result transistor T1 is ON, and T2 is OFF. The discharge current consist of the current through R1 and R3. If the transformer stops working, the capacitors C1 and C2 are drained by the lower discharge current shown in Figure 10. The voltage drops to a point where transistor T1 is switched OFF (13 in Figure 10). As a result the base of transistor T2 is pulled high and is switched ON. The discharge current increases with the current flowing through R4 and the result is a high discharge current (14 in Figure 10).

Figure 10 also shows the linear discharge of the capacitors C1,C2 when the current source is used, as shown in Figure 4. As can be seen from Figure 10, the linear and non-linear curves can drop the voltage over the capacitors in a similar time span.

Figures 6 to 8 show the third embodiment of a sub-circuit of the present invention that is similar to the sub-circuit shown in Figure 5, with the same doubler circuit, but which includes a different non-linear current regulator 3.

The non-linear current regulator 3 includes:
a third transistor T3 with the collector of the third transistor T3 connected between a first capacitor C1 and a first diode D1 of the Delon doubler circuit;
a third diode D3 connected between the first diode D1 and a second diode D2 of the Delon doubler circuit and said third diode D3 being connected to the base of the third transistor T3;
a fourth transistor T4 with the emitter of the fourth transistor T4 connected between a second capacitor C2 and the second diode D2 of the Delon doubler circuit, and with the collector of the fourth transistor T4 being connected to the emitter of the third transistor T3;
a fourth diode D4 connected between the first diode D1 and the second diode D2 of the Delon doubler circuit and said fourth diode D4 being connected to the base of the fourth transistor T4;
a third capacitor C3 connected parallel to the third and fourth diodes D3,D4; and
a fifth resistor R5 connected parallel to the third capacitor C3.

Capacitors C1 and C2 are only discharged if the transformer stops generating output voltage. When this happens, resistor R5 drains capacitor C3. Capacitor C3 is directly connected to the base of T3 and T4, which are both in a so-called "emitter-follower" configuration. Both emitters will follow the discharge curve of capacitor C3 via the base emitter junction of each transistor. C3 is typically a 10nF capacitor and the resistor is of the order of 2200 Ω. By choosing such a combination the dissipation in the resistor is kept low.

When the transformer generates an output voltage, the capacitor C3 is kept charged and no significant current will flow through T3 and T4.

An example of a charge pulse is show in Figure 7 with dashed lines indicating the current flow through the components. In this case AC1 is negative and AC2 is positive. Transistor T3 is switched OFF while transistor T4 is switched ON. If one of the transistors is switched OFF, no current will flow through both of them keeping the capacitors C1 and C2 charged. C3 is charged via D3 and the base emitter junction of T3. When AC1 is positive and AC2 is negative, C3 is charged via diode D4 and the base emitter junction of T3.

As shown in Figure 8, if the transformer stops, C3 is no longer charged and resistor R5 starts discharging capacitor C3. Capacitors C1 and C2 will be discharged via the emitters of T3 and T4.

This embodiment can achieve very low dissipation as the capacitors will only be discharged once the transformer stops generating output voltage.

The sub-circuits of Figures 4 to 8 can be implemented in the electronic transformer, between the transformer and load or as part of the load, e.g. inside the LED lamp. In a bi-pin lamp, two pins protrude out of the base of lamp and comprise the electrical connection to the lamp. The dimensions and distance between the two pins vary depending on the standard used and the G4 and G5.3 standards are the most common. The present invention includes a universal way to apply the sub-circuits shown in Figures 4 to 8, externally via contact to these pins to existing LED lights which do not turn on correctly because of the minimum load requirement.

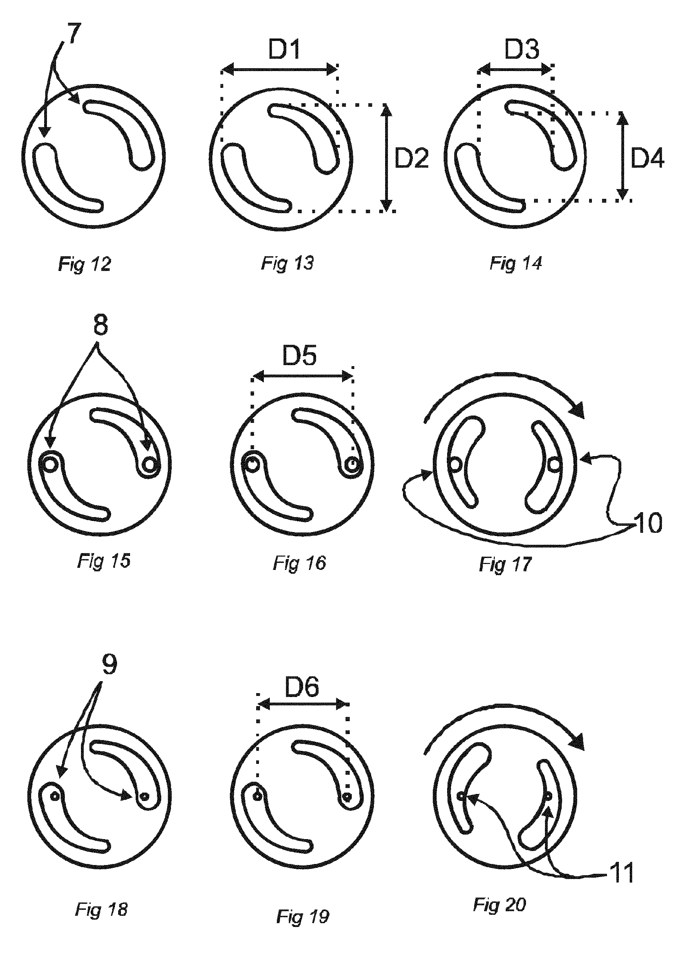

In Figures 12 to 14, the profile of a generally disc-shaped rigid printed circuit board (PCB) is shown with plated slots 7. The PCB is used to mount the components of one of the electronic sub-circuits of Figures 4 to 8 and each slot 7 forms one of the connections of the sub-circuit to one of the pins of a bi-pin LED light. The points in the sub-circuits that are to be connected to the LED lights are the same points that are connected to the output of the transformer, i.e. terminals AC1 and AC2. Accordingly, the sub-circuits of Figures 4 to 8 are connected to the transformers, parallel to the LED lights.

Each of the slots 7 is curved and extends generally concentrically i.e. generally along a common radius, spaced inwardly from the circumference of the PCB and the radial width of each slot tapers in a common rotational direction - which is counter-clockwise in the examples. Each slot tapers at its outer edge so that the overall outside width (i.e. the distance between the outer edges of the slots, measured across the centre of the disc) is at a maximum when measured between two ends of the slots (at D1) and is less when measured between the opposite two ends of the slots (at D2). Each slot 7 also tapers at its inner edge so that the overall inside width (i.e. the distance between the inner edges of the slots, measured across the centre of the disc) is at a minimum when measured between two ends of the slots (at D3) and is more when measured between the opposite two ends of the slots (at D4).

Each slot 7 has a wide end where its overall outside width is the highest D1 and its overall inside width is the least D3, and a narrow end where its overall outside width is the least D2 and its overall inside with is the most D4. With the orientations of the slots 7 shown in the drawings, the width of each slot at a particular point is reduced if the PCB is rotated clockwise relative to that point, and vice versa.

Referring to Figures 15 to 17, G5.3-type base pins 8 can fit through both slots of the PCB with clearance at the wide ends of the slots and if the PCB is rotated clockwise relative to the pins, the overall outer width of the slots in the vicinities of the pins, is reduced until the outer edges of the slots make good contact with the pins and are held in such contact by a taper lock of the tapering outer surfaces of the slots.

Referring to Figures 18 to 20, G4-type base pins 9 can fit through both slots of the PCB with clearance at the wide ends of the slots and if the PCB is rotated clockwise relative to the pins, the overall inner width of the slots in the vicinities of the pins, is increased until the inner edges of the slots make good contact with the pins and are held in such contact by a taper lock of the tapering inner surfaces of the slots.

The distance D5 between the G5.3-type base pins 8 is more than the distance D6 between the G4-type base pins 9 and the diameters of the pins 8 are more than the diameters of the pins 9. Yet, the unique shape of the slots 7 allows pins with larger diameters or which are spaced farther apart to lock against the outside walls of the slots, while thinner pins or pins that are spaced closer together are locked against the inside wall of the slots. In both instances a clock-wise rotation of the PCB locks the pins and a counter-clockwise rotation releases the pins.

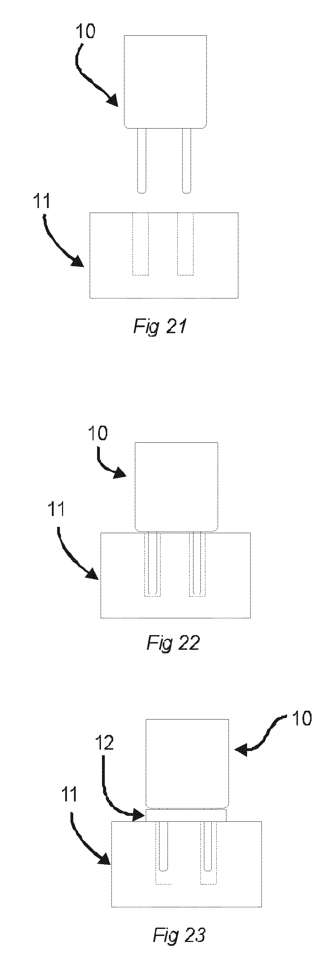

Referring to Figures 21 to 23, to install the PCB (numbered 12 in Figure 23) of Figures 12 to 20 (and thus any of the sub-circuits of Figures 4 to 8), the pins of a bi-pin base 10 of an LED lamp are passed through the wide ends of the slots 7 of the PCB (as shown in Figures 15 and 18) and the PCB is rotated clockwise until the slots make firm contact with the pins (as shown in Figures 17 and 20). The pins are then inserted into the recesses of a bi-pin lamp holder 11, with the PCB between the base 10 and the holder 11 (as shown in Figure 23).

The PCB holds the advantages that one PCB model fits different bi-pin base models like G4 and GU5.3 and only a simple clock-wise rotation is required to fit the PCB to apply the sub-circuits to a variety of bi-pin LED lamps that do not work when connected to electronic transformers, with a universal twist-lock mechanism. Another advantage over prior art is that no extra bi-pin / holder is required, which would increase distance between the base 10 and holder 11 - or increase the overall size of the installation.

Various other modifications will be apparent to those skilled in the art and will not be described in further detail here.

It will be understood that the present invention has been described above purely by way of example, and modifications of detail can be made within the scope of the invention.

Reference numerals appearing in the claims are by way of illustration only and shall have no limiting effect on the scope of the claims.

## Claims

1. A sub-circuit including connectors (AC1 ,AC2) configured for connecting the sub-circuit to at least one transformer and for connecting the sub-circuit to at least one powered circuit, said sub-circuit including:
at least one Delon doubler circuit (D1,D2,C1,C2) that is connectable to the transformer via the connectors (AC1 ,AC2) and that is configured to supply DC to an output of the Delon doubler circuit (D1 ,D2,C1 ,C2); and
a current regulator (1) connected to the output of the Delon doubler circuit (D1,D2,C1,C2).

2. A sub-circuit according to claim 1, wherein the current regulator is a constant current regulator (1).

3. A sub-circuit according to claim 1, wherein the current regulator is a non-linear current regulator (2,3).

4. A sub-circuit according to claim 3, wherein the current regulator (2) comprises a circuit including a first resistor (R1) and a second resistor (R2) connected in series, a first transistor (T1) with the base of the first transistor (T1) connected between the first and second resistors (R1,R2) and with the base and emitter of the first transistor (T1) connected parallel to the second resistor (R2), a third resistor (R3) connected between the collector of the first transistor (T1) and the end of the first resistor (R1) that is opposite from the second resistor (R2), and a second transistor (T2) with the base and the collector of the second transistor (T2) connected parallel to the third resistor (R3), the emitter of the second transistor (T2) being connected to the emitter of the first transistor (T1) via a fourth resistor (R4).

5. A sub-circuit according to claim 3, wherein the current regulator comprises a circuit including:
a third transistor (T3) with the collector of the third transistor (T3) connected between a first capacitor (C1) and a first diode (D1) of the Delon doubler circuit;
a third diode (D3) connected between the first diode (D1) and a second diode (D2) of the Delon doubler circuit and said third diode (D3) being connected to the base of the third transistor (T3);
a fourth transistor (T4) with the emitter of the fourth transistor (T4) connected between a second capacitor (C2) and the second diode (D2) of the Delon doubler circuit, and with the collector of the fourth transistor (T4) being connected to the emitter of the third transistor (T3);
a fourth diode (D4) connected between the first diode (D1) and the second diode (D2) of the Delon doubler circuit and said fourth diode (D4) being connected to the base of the fourth transistor (T4);
a third capacitor (C3) connected parallel to the third and fourth diodes (D3,D4); and
a fifth resistor (R5) connected parallel to the third capacitor (C3).

6. A sub-circuit according to any one of the preceding claims, which is an analogue circuit.

7. A sub-circuit according to any one of the preceding claims, wherein the current regulator (1,2,3) and capacitors (C1,C2) of the Delon doubler circuit (D1 ,D2,C1 ,C2) are configured such that the capacitors (C1 ,C2) are discharged, in use, by the current regulator (1,2,3) at a rate high enough for said discharges to occur at a frequency that is higher than what is visually perceptible.

8. A sub-circuit according to any one of the preceding claims, wherein the current regulator (1,2,3) and capacitors (C1,C2) of the Delon doubler circuit (D1,D2,C1,C2) are configured such that the capacitors (C1,C2) are discharged, in use, by the current regulator (1,2,3) at a rate high enough to change between low and high impedance multiple times during the power cycle of a source of AC power that is connected to the connectors (AC1 ,AC2).

9. A sub-circuit according to any one of the preceding claims, wherein said sub-circuit is mounted on a printed circuit board (PCB) and the connector (AC1 ,AC2) is in the form of two slots (7) defined in the PCB.

10. A sub-circuit according to claim 9, wherein each of the slots (7) has a curved shape and extends concentrically in the PCB and the radial widths of each of the slots (7) taper in a common rotational direction.
